# EUROPEAN PATENT SPECIFICATION

(11) **EP 0 717 454 B1**
(45) Date of publication and mention of the grant of the patent: **27.10.1999**
(21) Application number: 95119787.0
(22) Date of filing: 15.12.1995
(51) Int. Cl.: H01M 4/04, H01M 4/82, H01M 4/80

(54) **Manufacturing method of electrode plates for batteries**
Herstellungsverfahren für Elektrodenplatten von Batterien
Méthode de fabrication de plaques d'électrodes pour batteries

(30) Priority: 16.12.1994 JP 31341594
(43) Date of publication of application: 19.06.1996
(73) Proprietor: MATSUSHITA ELECTRIC INDUSTRIAL CO., LTD., Kadoma-shi, Osaka 571-0050 (JP)
(72) Inventor: Tanikawa, Hideo, Hirakata-shi, Osaka (JP); Takayanagi, Takeo, Nara-shi, Nara, 630 (JP); Saito, Kazuo, Moriguchi-shi, Osaka (JP)
(74) Representative: Kügele, Bernhard

(56) References cited:
- US-A- 2 766 721
- US-A- 3 393 096
- US-A- 4 245 584
- PATENT ABSTRACTS OF JAPAN vol. 004 no. 056 (E-008) ,25 April 1980 & JP-A-55 025913 (FURUKAWA BATTERY CO LTD:THE) 25 February 1980,
- PATENT ABSTRACTS OF JAPAN vol. 012 no. 217 (E-624) ,21 June 1988 & JP-A-63 013272 (JAPAN STORAGE BATTERY CO LTD) 20 January 1988,
- PATENT ABSTRACTS OF JAPAN vol. 004 no. 130 (E-025) ,12 September 1980 & JP-A-55 083164 (MATSUSHITA ELECTRIC IND CO LTD) 23 June 1980,
- PATENT ABSTRACTS OF JAPAN vol. 013 no. 486 (E-840) ,6 November 1989 & JP-A-01 194265 (SONY CORP) 4 August 1989,
- CHEMICAL ABSTRACTS, vol. 92, no. 2, 14 January 1980 Columbus, Ohio, US; abstract no. 8874, KURIHARA, KENJI ET AL 'Cadmium electrodes for alkaline secondary'
- CHEMICAL ABSTRACTS, vol. 91, no. 10, 3 September 1979 Columbus, Ohio, US; abstract no. 76903, KURIYAMA, KENJI ET AL 'Cadmium anode for alkaline batteries'

## Description

The present invention relates to a manufacturing method of paste-type electrode plates for batteries using a substrate of conductive thin sheet such as a metallic strip.

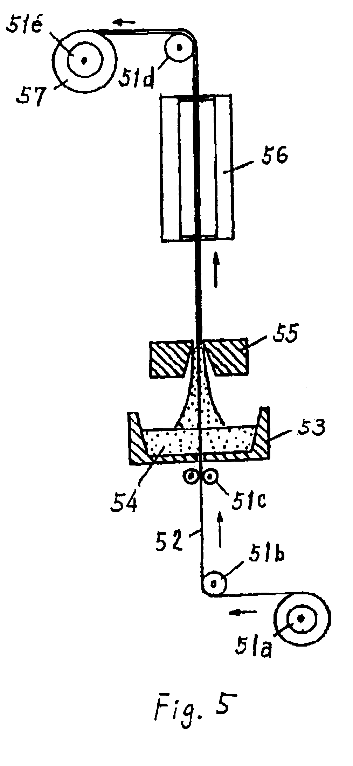

A typical conventional example of continuous manufacturing equipment for paste-type electrode plates in which the paste-type electrode plates are manufactured by coating and drying a paste mainly including an active material on both sides of a substrate of metallic strip is shown in Fig. 5.

Hereafter, a paste-type cadmium negative electrode plate will be illustrated as an example. In Fig. 5, substrate 52 of nickel-plated and perforated steel strip wound around substrate feed roller 51a is guided by a pair of guide rollers 51c via turn roller 51b into paste vessel 53 through a slit at the vessel bottom. Paste 54 mainly including an active material whose viscosity is controlled in nearly a predetermined value is stored in paste vessel 53. Substrate 52 is attached with paste 54 on its both sides and pulled up. The thickness of paste 54 attached to both sides of the substrate has a tendency to become thicker as the viscosity of the paste becomes higher or pulling speed of substrate 52 becomes lower. Excess paste 54 attached to both sides of substrate 52 scraped by passed through a pair of doctor knives 55 adjusted at a predetermined slit width, so the paste of a predetermined thickness is coated on the both sides of the substrate. Then, the solvent (ethylene-glycol: later described) in the paste is vaporized to dry the paste by passed through drying oven 56. Finally, the continuous strip of paste-type cadmium negative electrode plate 57 is wound around winding roller 51e via turn roller 51d.

As a paste for cadmium negative electrode is used, for example, a mixture of 100 wt part cadmium oxide (CdO) as active material, 5 wt part nickel powder as conductive material, and vinyl-chloride acrylonitril co-polymer fibers of about 3 mm length as reinforce material, the mixture is mixed with ethylene glycol solution containing 0.5 wt % of poly vinyl alcohol as binder. When a cadmium negative electrode plate having a high packing density of the active material is required, press rollers (not shown in Fig. 5) are provided between drying oven 56 and turn roller 51d, the continuous strip is pressed to a predetermined thickness, and then wound by winding roller 51e. Finally, the strip with the paste is cut in a predetermined size after formation, washing, drying and press processes to finish paste-type cadmium negative electrode plates for a single cell.

With a continuous strip electrode obtained according to said conventional substrate pulling up type manufacturing method in which substrate is pulled up from in the paste vessel attaching the paste on its both sides and the excess paste is scraped by doctor knives, the paste thicknesses on its both sides are hardly the same in spite of using the doctor knives having a precisely adjusted slit width. Further, the paste not only near the surface but inner of the paste layer may hold bubbles as the coating progresses, so it was difficult to realize the equal packing density all over the continuous strip electrode. When this continuous strip electrode is cut to form electrodes for a single cell at the final step after formation, washing, drying, and press processes, packed amounts of active material in respective cells may be different resulting in variations of the discharge capacities of completed cells. The problems with the conventional continuous manufacturing equipment for a strip electrode shown in Fig. 5 will be illustrated here.
(1) Applied paste is limited in composites having a high viscosity range in which paste 54 does not fall down through a slit at the bottom of paste vessel 53. Since substrate 52 has to be passed through two narrow slits at the bottom of vessel 53 and doctor knives 55, the frictional resistance is high, substrate 52 thus must be pulled strongly. So, it is difficult to pull the substrate 52 uniformly across the width, and longitudinal creases in the running direction is sometimes produced. In this case, thickness of coated paste may be uneven across the width. Also substrate 52 tends to snake right and left during the running, so a drive control mechanism for preventing the substrate from snaking is required resulting in high cost of the manufacturing equipment.
(2) As mentioned before, excess paste containing mainly active material attaching both sides of substrate 52 is scraped by doctor knives 55. To supply paste across the width of substrate 52 without the shortage, substrate 52 has to be passed center of the slit of doctor knives 55. But such parts for defining path of the substrate as rollers or extrusions for center guide which may obstruct paste supplying cannot be provided near doctor knives 55. This results in uneven thickness of the paste layers on both sides of substrate 52 after passing doctor knives 55.
(3) When the excess paste which is scraped falls down to paste vessel 53, air is involved in the paste in paste vessel 53. Accordingly, as the coating progresses, bubbles are produced at the surface and near substrate 52 in the paste layer.

Another manufacturing method for a continuous strip electrode is known, see e.g. US-A-2 766 721, US-A-3 393 096 or JP-A-55 025 913 in which paste containing mainly active material is stored in a hopper having an opening at its upper portion and provided with a slit of adjustable width at its bottom, substrate is passed from upper side to lower side through the hopper to be coated with the paste on its both sides and dried.

The present invention largely improved the problem of uneven discharge capacity of respective cells due to the variations of the packing amount of active material at the parts of the electrode with the conventional method described above, and also largely improved the productivity.

### SUMMARY OF THE INVENTION

The present invention is a manufacturing method of a continuous strip electrode comprising the steps of:
storing paste (5) in a hopper (3) having an opening at its upper portion and provided with a slit of adjustable width at its bottom outlet, said hopper further including a taper portion (22) and a straight portion (23) in succession, said straight portion having a length of 10 to 50 times of the thickness of a sheet coated with paste containing mainly active material on its both sides, said paste (5) containing mainly active material which falls by its own gravity to said taper (22) and straight (23) portion, said slit being composed of a pair of doctor blades (4) and provided at the lower end of said straight portion (23),
providing guide roller mechanisms (1c, 1d) for guiding a substrate (2) of conductive thin sheet such as a metal strip so that said substrate passes through the center of said slit, in said hopper (3) and under said slit, respectively, said hopper having a symmetrical pair of comb teeth-like projection structures (21) forming said slit which is a little wider than the thickness of said substrate (2) at said taper portion (22) of the hopper for guiding said substrate (2) in the center of said slit,
supplying and moving said substrate (2) from said opening of hopper via said slit, from the upper side to the lower side, to coat said paste (5) on both sides of said substrate (2) in a predetermined thickness;
drying said coated paste (5) and vaporizing the solvent in said coated paste (5).

The first object of the invention is to suppress variations of packing amount of active material at respective portions of an electrode plate due to the uneven thickness across the width or on the both sides caused by high friction resistance when the substrate is driven and to involved bubbles caused by involving air in the paste in conventional methods.

The second object is to improve productivity of electrodes by increasing running speed of the substrate, reducing frictional resistance by coating paste, (the reason is later described).

### BRIEF DESCRIPTION OF THE DRAWINGS

Fig. 1 is a schematic structural illustration of manufacturing equipment for battery electrode plates of the invention.

Fig. 2 is an enlarged vertical sectional view of a hopper of the invention.

Fig. 3 is a perspective view showing one of a pair of substrate center guides provided in the hopper of the invention.

Fig. 4 is a transverse sectional view along A-A' line of the hopper of the invention shown in Fig. 2.

Fig. 5 is a schematic structural illustration of typical conventional manufacturing equipment for battery electrode plates.

### DESCRIPTION OF THE PREFERRED EMBODIMENTS

Embodiments of the invention will be illustrated referring to drawings using a paste-type cadmium negative electrode plate as an example in the same manner as the conventional example.

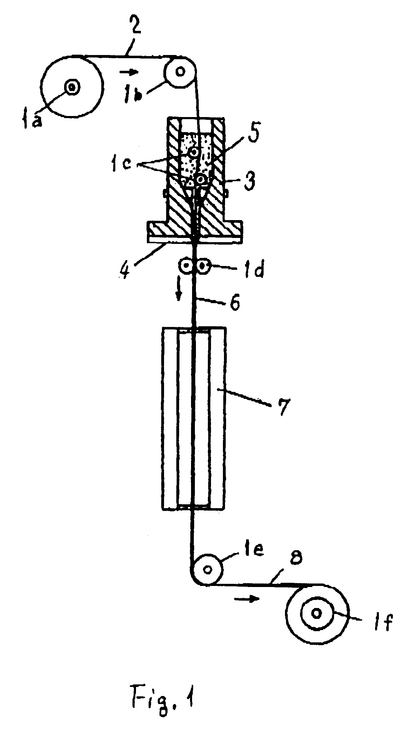

Fig. 1 is a schematic structural illustration of manufacturing equipment for battery electrode plates of the invention. In Fig. 1, substrate 2 of nickel-plated and perforated steel strip wound around substrate feed roll 1a is guided to hopper 3 having an opening at its upper portion and provided with a slit of predetermined width at its bottom outlet via turn roller 1b. The slit width can be adjusted by moving a pair of doctor blades 4 synchronously forward and backward in the same pitches thereby defining coating thickness of the paste layer. Paste 5 containing mainly CdO is stored in hopper 3. Substrate 2 is moved in the paste 5 in hopper 3 without snaking by guide rollers 1c provided in the hopper and a pair of guide rollers 1d provided under and adjacent to the doctor blades 4, guide rollers 1d pinching substrate 2 at the both edge portions with no paste. A controlled thickness of paste layers is coated on the both sides of substrate 2 having passed through the slit at the outlet of hopper 3. Paste 5 is the same in composition as in the conventional example. Next, solvent of ethylene glycol in the paste is vaporized while coated sheet 6 is passed in tunnel drying furnace 7. The dried continuous strip cadmium negative electrode 8 is wound around the winding roller 1f via turn roller 1e. It is needless to say that each of parts of a manufacturing equipment of the invention is designed and fabricated according to the width of an objective substrate.

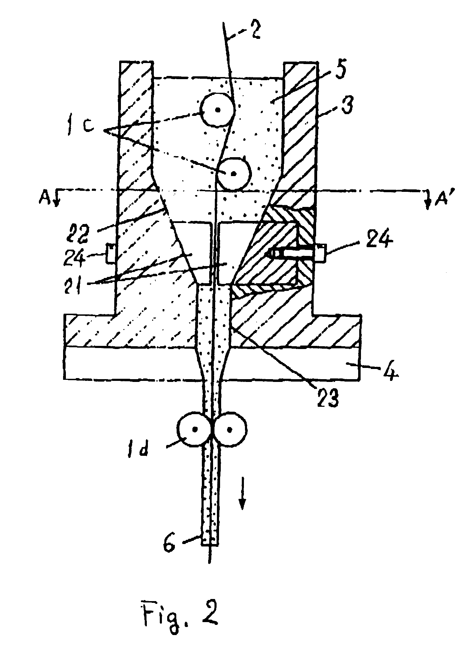

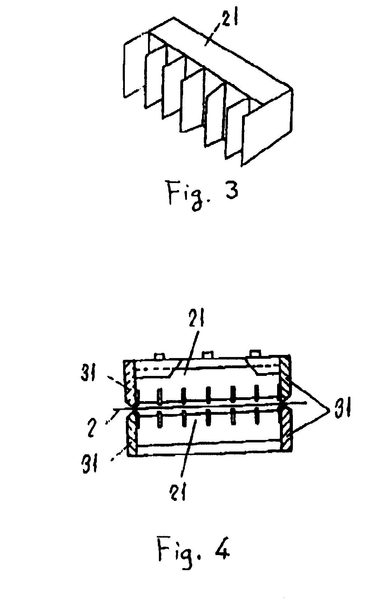

Fig. 2 is an enlarged vertical sectional view of the hopper illustrated in Fig. 1. Fig. 3 is a perspective view showing one of a pair of substrate center guides having a comb teeth like shape provided in the hopper. Fig. 4 is a transverse sectional view along A-A' line of the hopper of the invention shown in Fig. 1.

In these figures, substrate 2 is moved in paste 5 in hopper 3 from upper side to lower side. At this time, substrate 2 is weakly tensed by a pair of guide rollers 1c and guided to pass the center of the slit at the outlet of hopper 3 by a pair of comb teeth like projections 21 and rollers 1c and 1d for guiding substrate 2 in the center position shown in Fig. 3 and Fig. 4 which are rotating synchronizing with the speed of substrate 2 and substrate 2 thus prevented from snaking. Rotation guide rollers lc and projections 21 for substrate center guide are sunk in paste 5. The gap between confronting tips of a pair of comb teeth like projections 21 is a little larger than the thickness of substrate 2 so as not to obstruct running of substrate 2. The comb teeth are made as long as possible and the pitch are made as large as possible so as not to obstruct supplying paste. Since the tips of projections 21 for substrate center guide touch substrate 2 during running, wearing of the tips with the passage of time can not be avoided.

Accordingly, each of projections is fixed by a screw 24 as shown in Fig. 2 and can be replaced. At the lower part of hopper 3 having an opening at its upper portion, straight portion 23 having the length equivalent to 10 - 50 times of the thickness of paste coated sheet 6 is formed after taper portion 22. When the length of straight portion 23 is less than 10 times of the thickness of the paste coated sheet, the thickness of the paste coated sheet becomes relatively larger than a designed value though the reason is not yet known. When it excesses 50 times, the thickness of the paste coated sheet tends to become smaller than a designed value due to, may be, increased frictional resistance during running of substrate 2. Accordingly, as said before, the length of straight portion right before the outlet of the hopper 3 is generally set at 10-50 times of the thickness of a paste coated sheet and preferably at 30 times.

Paste 5 is fed from the opening at upper portion of hopper 3 or from side wall of hopper 3 by a paste transfer pump (not shown) to keep the same level. Paste 5 in the hopper 3 moves down by its own head to the slit at the outlet of hopper 3 formed of doctor blades 4 via taper portion 22, straight portion 23, and paste is coated in a predetermined uniform thickness on both sides of the substrate 2. As shown in Fig. 4, by providing two pairs of rubber seals 31 at the both ends of the projections 21 of comb teeth like center guide, portions with no paste can be obtained at the both ends of substrate 2.

As mentioned before, according to the invention, paste containing mainly active material passes only one slit at the outlet of hopper 3 and paste is successively coated from the paste near the outlet of the hopper and successively fed downward by its own gravity, so the paste does not stay for a long time, and paste of homogeneous composite is coated. The factors causing uneven thickness of coated paste layer on the both sides of the substrate in conventional methods such as high frictional resistance at the painting, loose positioning of a substrate to the center, air involving into the paste can be avoided so that packing amount of the active material can be uniform all over the electrode plate.

Table 1 shows the variations of thicknesses of paste-type cadmium negative electrode plate of 0.5 mm thick after coating and drying according to the invention and conventional one for comparison.

**Table 1**

| | Thickness Variations |
|---|---|
| Present Invention | 0.5 ± 0.01 mm (± 2%) |
| Conventional One | 0.5 ± 0.025 mm (± 5%) |

As clarified from the table 1, thickness variation is largely improved from ± 5% in the conventional method to ± 2% in the method of present invention.

As mentioned before, since paste is coated by flowing down by own gravity moving together with the substrate, paste of low viscosity can be used. At this time, running speed of the substrate, that is coating speed of the paste can be increased and thus productivity of electrode plate is largely improved.

In above embodiment, a paste-type cadmium negative electrode plate is illustrated as an example though, the present invention is not limited by kinds of active materials. The present invention can be applied for: a manganese dioxide positive electrode plate using a perforated stainless steel sheet or an expanded metal sheet as a substrate, a graphite fluoride positive electrode plate using a titanium expanded metal as a substrate, an iron disulfide positive electrode plate using an aluminum foil substrate, for a lithium primary battery for high-rate discharging; a hydrogen absorbing alloy negative electrode plate and an iron negative electrode plate using a nickel-plated and perforated steel sheet substrate for an alkali battery; and lithium cobaltate (LiCoO2) positive electrode plate using an aluminum foil substrate and carbon negative electrode plate using copper foil substrate for a lithium ion battery. As described above, a substrate used is determined its material and surface treatment such as plating according to kinds of active materials and electrolytes. Also a perforated metal foil, metal sheet, expanded metal sheet, or the like is selected according to composite of the paste to be packed or the thickness of a finished electrode. When an electrode packed with high density active material is fabricated, paste containing mainly active material is pressed after coated and dried in a same manner as in the conventional method.

Manufacturing methods of electrode plates for batteries was illustrated above though, the present invention can also applied for manufacturing a porous metal plaque impregnated with active material therein. In the manufacturing, a paste like slurry containing mainly fine powder of a metal such as carbonyl nickel is coated on the both sides of substrate of a conductive thin sheet, and dried, then sintered to combine between metal powder particles in inert or reduction atmosphere, and then active material is impregnated thereinto.

## Claims

1. A method of manufacturing battery electrode plates comprising the steps of:
storing paste (5) in a hopper (3) having an opening at its upper portion and provided with a slit of adjustable width at its bottom outlet, said hopper further including a taper portion (22) and a straight portion (23) in succession, said straight portion having a length of 10 to 50 times of the thickness of a sheet coated with paste containing mainly active material on its both sides, said paste (5) containing mainly active material which falls by its own gravity to said taper (22) and straight (23) portion, said slit being composed of a pair of doctor blades (4) and provided at the lower end of said straight portion (23),
providing guide roller mechanisms (lc, ld) for guiding a substrate (2) of conductive thin sheet such as a metal strip so that said substrate passes through the center of said slit, in said hopper (3) and under said slit, respectively, said hopper having a symmetrical pair of comb teeth-like projection structures (21) forming said slit which is a little wider than the thickness of said substrate (2) at said taper portion (22) of the hopper for guiding said substrate (2) in the center of said slit,
supplying and moving said substrate (2) from said opening of hopper via said slit, from the upper side to the lower side, to coat said paste (5) on both sides of said substrate (2) in a predetermined thickness;
drying said coated paste (5) and vaporizing the solvent in said coated paste (5).

2. Method of manufacturing battery electrode plates according to claim 1, wherein said pair of comb teeth like projection structures (21) for guiding the substrate (2) in the center of the slit are replaceable.

3. Method of manufacturing battery electrode plates according to claim 1 or 2, wherein two pairs of seal pieces (31) for forming strip like portions with no paste at both ends of both front and back sides of the substrate (2) are provided at the both ends of the comb teeth like projection structures (21).

4. Method of manufacturing battery electrode plates according to one of claims 1 to 3, wherein the coated substrate is pressed to a predetermined thickness after coating and drying steps.

5. Method of manufacturing a porous metal plaque for battery electrode plates comprising the steps of:
storing paste like slurry containing mainly fine powder of metal such as carbonyl nickel in a hopper having an opening at its upper portion and provided with a slit of adjustable width at its bottom outlet; said hopper further including a taper portion (22) and a straight portion (23) in succession, said straight portion having a length of 10 to 50 times of the thickness of a sheet coated with said paste like slurry on its both sides
providing guide mechanisms for guiding a substrate (2) of conductive thin sheet such as a metal strip so that said substrate passes through the center of the slit, in said hopper and under said slit, said slit being a little wider than the thickness of said substrate,
supplying and moving said substrate (2) from said opening of said hopper via said slit, from the upper side to the lower side, to coat both sides of said substrate in a predetermined thickness,
drying said paste, and
sintering metal fine powder particles to combine them to each other.

## Patentansprüche

1. Verfahren zur Herstellung von Batterieelektrodenplatten mit den Schritten:
Speichern einer Paste (5) in einem Trichter (3), der oben eine Öffnung hat und an seinem unteren Ablauf mit einem Schlitz regulierbarer Breite versehen ist, wobei ferner der Trichter hintereinander einen konischen Teil (22) und einen geraden Teil (23) aufweist und der gerade Teil 10 bis 50 mal so lang ist wie die Dicke einer beidseitig mit hauptsächlich aktives Material enthaltenden Paste beschichteten Scheibe, wobei die hauptsächlich aktives Material enthaltende Paste (5) wegen der auf sie wirkenden Schwerkraft durch den konischen (22) und den geraden (23) Teil fällt und der Schlitz aus einem am unteren Ende des geraden Teils (23) angeordneten Paar Schermessern (4) gebildet wird,
Bereitstellung einer Anordnung von Führungsrollen (1c,1d) zum Führen eines Substrats (2), das aus einem leitfähigen dünnen Blech - wie z. B. einem Metallstreifen - besteht, so dass das Substrat durch die Schlitzmitte bzw. im Trichter (3) und unter dem Schlitz entlang läuft, wobei der Trichter ein symmetrisches Paar von aufgesetzten, zu Kammzinken ähnlichen Bauteilen (21) aufweist, die den Schlitz bilden, der am konischen Teil (22) des Trichters etwas breiter ist als die Dicke des Substrats (2), um das Substrat (2) in die Mitte des Schlitzes hineinzuführen,
Zuführen und Weiterbewegen des Substrats (2) von der Trichteröffnung durch den Schlitz, von der oberen zur unteren Seite, um beide Seiten des Substrats (2) mit der Paste (5) in einer vorgegebenen Dicke zu beschichten,
Trocknen der Pasteschicht (5) und Verdampfung des in der Pasteschicht (5) enthaltenen Lösungsmittels.

2. Verfahren zur Herstellung von Batterieelektrodenplatten nach Anspruch 1, wobei das Paar aufgesetzter, Kammzinken-ähnlicher Bauteile (21), die dem Führen des Substrats (2) in die Schlitzmitte dienen, austauschbar ist.

3. Verfahren zur Herstellung von Batterieelektrodenplatten nach Anspruch 1 oder 2, wobei zwei Paare von Abschlussstücken (31) an beiden Enden der zu Kammzinken ähnlichen Bauteile (21) angebracht sind, um auf Vorder- und der Rückseite des Substrats (2) an beiden Enden eine streifenförmige Fläche pastenfrei zu halten.

4. Verfahren zur Herstellung von Batterieelektrodenplatten nach einem der Ansprüche 1 bis 3, wobei das beschichtete Substrat nach dem Beschichten und dem Trocknen auf eine vorgegebene Dicke gepresst wird.

5. Verfahren zur Herstellung einer porösen Metallplatte für Batterieelektrodenplatten mit den Schritten:
Speichern der pastenförmigen Suspension, die überwiegend ein feines Metallpulver wie z.B. Nickelkarbonyl enthält, in einem Trichter, der oben eine Öffnung hat und an seinem unteren Ablauf mit einem Schlitz regulierbarer Breite versehen ist, wobei ferner der Trichter hintereinander einen konischen Teil (22) und einen geraden Teil (23) aufweist und der gerade Teil 10 bis 50 mal so lang ist wie die Dicke einer beidseitig mit der pastenförmigen Suspension beschichteten Scheibe,
Bereitstellung eines Führungsmechanismus zum Führen eines Substrats (2), das aus einem leitfähigen dünnen Blech - wie z. B. einem Metallstreifen - besteht, so dass das Substrat durch die Schlitzmitte, im Trichter und unter dem Schlitz entlang läuft, wobei der Schlitz ein wenig breiter ist als die Dicke des Substrats,
Zuführen und Weiterbewegen des Substrats (2) von der Trichteröffnung durch den Schlitz, von der oberen zur unteren Seite, um beide Seiten des Substrats in einer vorgegebenen Dicke zu beschichten,
Trocknen der Paste und
Sintern der feinen Metallpulverpartikel, um sie miteinander zu verbinden.

## Revendications

1. Procédé de fabrication de plaques d'électrode de batterie comprenant les étapes consistant à :
stocker de la pâte (5) dans une trémie (3) comportant une ouverture au niveau de sa partie supérieure et munie d'une fente de largeur pouvant être réglée au niveau de son orifice inférieur, ladite trémie comprenant en outre une partie allant en se réduisant (22) et une partie droite (23) à la suite, ladite partie droite présentant une longueur correspondant à 10 à 50 fois l'épaisseur d'une feuille revêtue d'une pâte contenant principalement du matériau actif sur ses deux faces, ladite pâte (5) contenant principalement du matériau actif qui tombé de son propre poids vers ladite partie allant en se réduisant (22) et ladite partie droite (23), ladite fente étant composée d'une paire de racles (4) et étant disposée à l'extrémité inférieure de ladite partie droite (23),
prévoir des mécanismes de rouleaux de guidage (1c, 1d) afin de guider un substrat (2) d'une feuille mince conductrice telle qu'une bande métallique de façon que ledit substrat passe par le centre de ladite fente, dans ladite trémie (3) et sous ladite fente, respectivement, ladite trémie comportant une paire symétrique de structures en saillie en forme de dents de peigne (21) formant ladite fente, qui est un peu plus large que l'épaisseur dudit substrat (2) au niveau de ladite partie allant en se réduisant (22) de la trémie afin de guider ledit substrat (2) dans le centre de ladite fente,
alimenter et déplacer ledit substrat (2) depuis ladite ouverture de la trémie par l'intermédiaire de ladite fente, depuis le côté supérieur vers le côté inférieur, afin d'appliquer ladite pâte (5) sur les deux faces dudit substrat (2) suivant une épaisseur prédéterminée,
sécher ladite pâte appliquée (5) et évaporer le solvant dans ladite pâte appliquée (5).

2. Procédé de fabrication de plaques d'électrode de batterie selon la revendication 1, dans lequel ladite paire de structures en.saillie en forme de dents de peigne (21) destinées à guider le substrat (2) dans le centre de la fente peuvent être remplacées.

3. Procédé de fabrication de plaques d'électrode de batterie selon la revendication 1 ou 2, dans lequel deux paires d'éléments d'étanchéité (31) destinés à former des parties en forme de bande ne comportant pas de pâte aux deux extrémités des faces à la fois avant et arrière du substrat (2) sont prévus aux deux extrémités des structures en saillie en forme de dents de peigne (21).

4. Procédé de fabrication de plaques d'électrode de batterie selon l'une des revendications 1 à 3, dans lequel le substrat revêtu est comprimé jusqu'à une épaisseur prédéterminée après les étapes de revêtement et de séchage.

5. Procédé de fabrication d'une plaque de métal poreuse destinée à former des plaques d'électrode de batterie comprenant les étapes consistant à :
stocker une suspension ressemblant à de la pâte contenant principalement une poudre fine d'un métal tel que du nickel-carbonyle dans une trémie comportant une ouverture au niveau de sa partie supérieure et munie d'une fente de largeur pouvant être réglée au niveau de son orifice de sortie inférieur, ladite trémie comprenant en outre une partie allant en se réduisant (22) et une partie droite (23) à la suite, ladite partie droite présentant une longueur correspondant à 10 à 50 fois l'épaisseur d'une feuille revêtue de ladite suspension ressemblant à de la pâte sur ses deux faces,
prévoir des mécanismes de guidage afin de guider un substrat (2) d'une feuille mince conductrice telle qu'une bande métallique de façon que ledit substrat passe par le centre de la fente, dans ladite trémie et sous ladite fente, ladite fente étant un peu plus large que l'épaisseur dudit substrat,
alimenter et déplacer ledit substrat (2) depuis ladite ouverture de ladite trémie par l'intermédiaire de ladite fente, depuis le côté supérieur vers le côté inférieur, afin de revêtir les deux faces dudit substrat suivant une épaisseur prédéterminée,
sécher ladite pâte, et
fritter les particules de poudre fine de métal afin de les combiner les unes aux autres.
